# EUROPEAN PATENT APPLICATION

(11) **EP 2 523 485 A1**
(43) Date of publication of application: **14.11.2012**
(21) Application number: 10851217.9
(22) Date of filing: 12.05.2010
(51) Int. Cl.: H04W 12/00

(54) **METHOD AND SERVICE PLATFORM FOR IMPLEMENTING FUNDS TRANSFER USING MOBILE TERMINAL**

(71) Applicant: ZTE Corporation, Shenzhen, Guangdong 518057 (CN)
(72) Inventor: CHEN, Pengfei, Shenzhen Guangdong 518057 (CN); YANG, Mingwei, Shenzhen Guangdong 518057 (CN); YI, Jia, Shenzhen Guangdong 518057 (CN)
(74) Representative: Wilson Gunn
(86) International application number: PCT/CN2010/072677
(87) International publication number: WO 2011/140710

(57) **Abstract**

The disclosure discloses a method for implementing account transfer using a mobile terminal, which includes: an uplink processing module receives a transfer-out transaction request from a transferor and a transfer-in transaction request from a transferee or an agent; an encryption and decryption module performs format verification and decryption of the transfer-out transaction request and transfer-in transaction request, randomly generates a withdrawal password according to the transfer-out transaction request, and provides the withdrawal password to a transaction processing module and a transferee; the transaction processing module authenticates a user accessing to the mobile terminal wallet transaction, performs the transfer-out operation according to the transfer-out transaction request, and performs the transfer-in operation according to the transfer-in transaction request and the withdrawal password provided by the encryption and decryption module; and a downlink processing module returns a response message to the mobile terminal of the transferor, transferee or agent after the transaction processing is completed. The disclosure also discloses a service platform for a mobile terminal wallet transaction. By adopting the disclosure, the inconvenience caused by the fact that the current transfer way using the mobile terminal must be supported by the bank outlet is overcome.

## Description

### TECHNICAL FIELD

The disclosure relates to the intelligent network technology in the communications and financial field, in particular to a method and a service platform for implementing account transfer using a mobile terminal.

### BACKGROUND

With the development of society and the improvement of communications technology, the electronic business is increasingly growing up. A user does not satisfy with the mobile terminal as a pure communication tool, but has a higher expectation for it. The telephone payment service combines telephone, bank card and business payment organically, so that a user can finish the whole process of payment through a telephone. The account transfer using the mobile terminal as a part of mobile payment is increasingly popular and becomes a basic financial service. The account transfer using the mobile terminal refers to the transfer of funds deposited in the mobile account of a user to another account, and the account transfer and the basic financial transaction processing can be performed through the mobile terminal.

At present, the most common account transfer way using the mobile terminal is that: both a transferor and transferee bind their mobile terminals with bank cards and are registered in a transaction system, the transferor inputs a short message in a specified format, for example, "TM*bound mobile terminal number/bound bank account*transfer amount*transaction password", and sends this message to a specified transaction center number, and the system will transfer the funds from the account of the transferor to the account of the transferee according to the received message.

However, in the area with underdeveloped economy and less bank outlets, many mobile terminal users do not have the bank account, resulting in that the abovementioned account transfer way cannot meet the account transfer demands of these users. That is to say, the current account transfer way using the mobile terminal must be supported by the bank outlet (or bank account), which brings inconvenience to the actual application.

### SUMMARY

In view of this, the main purpose of the disclosure is to provide a method and a service platform for implementing account transfer using a mobile terminal, so as to overcome the inconvenience caused by the fact that the current account transfer way using the mobile terminal must be supported by the bank outlet (or bank account).

To achieve the purpose, the technical solution of the disclosure is implemented below.

The disclosure provides a service platform for a mobile terminal wallet transaction, which includes: an uplink processing module, an encryption and decryption module, a transaction processing module and a downlink processing module, wherein
the uplink processing module is configured to receive a transfer-out transaction request from a transferor and a transfer-in transaction request from a transferee or an agent;
the encryption and decryption module is configured to perform format verification and decryption of the transfer-out transaction request and transfer-in transaction request, to randomly generating a withdrawal password according to the transfer-out transaction request, and to provide the withdrawal password to the transaction processing module and transferee;
the transaction processing module is configured to authenticate a user accessing the mobile terminal wallet transaction, to perform the transfer-out operation according to the transfer-out transaction request, and to perform the transfer-in operation according to the transfer-in transaction request and the withdrawal password provided by the encryption and decryption module; and
the downlink processing module is configured to return a response message to the mobile terminal of the transferor, transferee or agent after the transaction processing is completed.

Preferably, the platform further includes: a data center which is configured to store account information of the transferor, transferee and agent, and to log the transaction.

Preferably, the transfer-out transaction request includes a mobile terminal number of the transferee, a transfer amount and a transaction password; and
wherein the transaction processing module is further configured to perform authentication according to the mobile terminal number of the transferor, the transaction password and the transfer amount, and to deduct the amount from the account of the transferor after the authentication is passed;
the downlink processing module is further configured to send a response message containing the withdrawal password to the mobile terminal of the transferee after the transaction processing is completed; and
the data center is further configured to log the transaction of the transfer as well as the mobile terminal number of the transferee and the withdrawal password.

Preferably, the transfer-in transaction request of the transferee includes: the mobile terminal number of the transferee, the withdrawal password and an agent code;
the encryption and decryption module is further configured to randomly generate a withdrawal verification code according to the transfer-in transaction request of the transferee;
the transaction processing module is further configured to verify the agent code and to update the transaction log of the transfer after the verification is passed;
the downlink processing module is further configured to send a response message containing the withdrawal verification code to the mobile terminal of the transferee after the transaction process is completed; and
the data center is further configured to record the agent code and the withdrawal verification code.

Preferably, the transfer-in transaction request of the agent includes: the mobile terminal number of the transferee, the withdrawal amount, the withdrawal verification code and the transaction password of the agent;
the transaction processing module is further configured to verify the mobile terminal number and transaction password of the agent, to query the corresponding transaction log from the data center according to the mobile terminal number of the transferee, the withdrawal account and the withdrawal verification code after the verification is passed, and to increase the amount in the account of the agent and calculating transaction commissions after the query is successful;
the downlink processing module is further configured to send a response message indicating successful withdrawal to the mobile terminal of the transferee after the transaction process is completed; and
the data center is further configured to record the calculated transaction commissions in the corresponding transaction log.

Preferably, the transaction processing module is further configured to return the amount deducted from the account of the transferor to the transferor in the case that the transferee has not made withdraw within a preset period after the amount is deducted from the account of the transferor.

The disclosure further provides a method for implementing account transfer using a mobile terminal, which includes:
receiving, by an uplink processing module, a transfer-out transaction request of a transferor and a transfer-in transaction request of a transferee or an agent;
performing verification and decryption of the transfer-out transaction request and transfer-in transaction request, randomly generating a withdrawal password according to the transfer-out transaction request, and providing the withdrawal password to a transaction processing module and a transferee, by an encryption and decryption module;
authenticating a user accessing to the mobile terminal wallet transaction, performing the transfer-out operation according to the transfer-out transaction request, and performing the transfer-in operation according to the transfer-in transaction request and the withdrawal password provided by the encryption and decryption module, by the transaction processing module; and
returning, by a downlink processing module, a response message to the mobile terminal of the transferor, transferee or agent after the transaction processing is completed.

Preferably, the method further includes:
storing account information of the transferor, transferee and agent, and logging the transaction, by a data center.

Preferably, the transfer-out transaction request includes a mobile terminal number of the transferee, a transfer amount and a transaction password; and
the method further includes:
performing authentication according to the mobile terminal number of the transferor, the transaction password and the transfer amount, and deducting the amount from the account of the transferor after the authentication is passed, by the transaction processing module;
sending, by the downlink processing module, a response message containing the withdrawal password to the mobile terminal of the transferee after the transaction processing is completed; and
logging, by the data center, the transaction of the transfer as well as the mobile terminal number of the transferee and the withdrawal password.

Preferably, the transfer-in transaction request of the transferee includes: the mobile terminal number of the transferee, the withdrawal password and an agent code; and
the method further includes:
randomly generating a withdrawal verification code according to the transfer-in transaction request of the transferee by the encryption and decryption module;
verifying the agent code and updating the transaction log of the transfer, by the transaction processing module, after the verification is passed;
sending a response message containing the withdrawal verification code to the mobile terminal of the transferee, by the downlink processing module, after the transaction process is completed; and
recording the agent code and the withdrawal verification code by the data center.

Preferably, the transfer-in transaction request of the agent includes: the mobile terminal number of the transferee, the withdrawal amount, the withdrawal verification code and the transaction password of the agent; and
the method further includes:
verifying the mobile terminal number and transaction password of the agent, querying the corresponding transaction log from the data center according to the mobile terminal number of the transferee, the withdrawal account and the withdrawal verification code after the verification is passed, and increasing the amount in the account of the agent and calculating the transaction commissions after the query is successful, by the transaction processing module;
sending a response message indicating successful withdrawal to the mobile terminal of the transferee by the downlink processing module after the transaction process is completed; and
recording the calculated transaction commissions in the corresponding transaction log by the data center.

Preferably, the method further includes: returning the amount deducted from the account of the transferor to the transferor by the transaction processing module in the case that the transferee has not made a withdraw within a preset period after the is deducted from the account of the transferor.

In the method and service platform for implementing account transfer using the mobile terminal provided by the disclosure, the uplink processing module receives the transfer-out transaction request from the transferor and the transfer-in transaction request from the transferee or agent; the encryption and decryption module performs format verification and decryption of the transfer-out transaction request and transfer-in transaction request, randomly generates a withdrawal password according to the transfer-out transaction request, and provides the withdrawal password to the transaction processing module and transferee; the transaction processing module authenticates a user accessing to the mobile terminal wallet transaction, performs the transfer-out operation according to the transfer-out transaction request, and performs the transfer-in operation according to the transfer-in transaction request and the withdrawal password provided by the encryption and decryption module; and the downlink processing module returns a response message to the mobile terminal of the transferor, transferee or agent after the transaction processing is completed.

By adopting the disclosure, the account transfer using the mobile terminal becomes more flexible and the transfer of funds can be completed only if the transferor knows the mobile terminal number of the transferee without binding the mobile terminal number of the transferee. For the area with less bank outlets, the account transfer using the mobile terminal according to the disclosure makes the account transfer and withdrawal of the user more convenient and fast, and also provides the operator with a new room for profits.

### BRIEF DESCRIPTION OF THE DRAWINGS

Fig. 1 is a diagram showing the structure of a system for implementing account transfer using a mobile terminal according to the disclosure;
Fig. 2 is a diagram showing the internal structure of a service platform for a mobile terminal wallet transaction according to the disclosure;

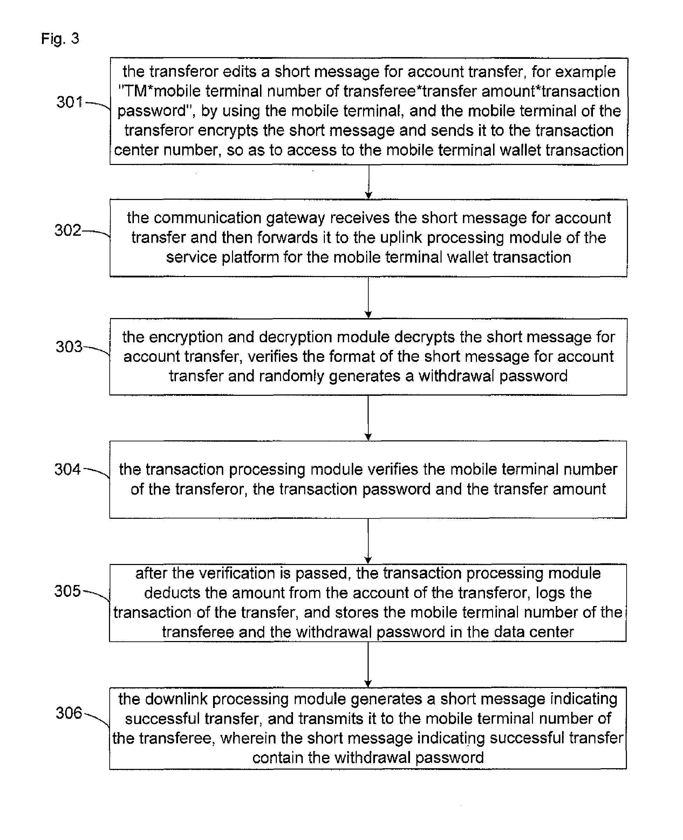

Fig. 3 is a flowchart showing a method for implementing account transfer using a mobile terminal according to the first embodiment of the disclosure;
Fig. 4 is a flowchart showing a method for implementing account transfer using a mobile terminal according to the second embodiment of the disclosure; and
Fig. 5 is a flowchart showing a method for implementing account transfer using a mobile terminal according to the third embodiment of the disclosure.

### DETAILED DESCRIPTION

The technical solution of the disclosure is further described below in conjunction with drawings and specific embodiments in detail.

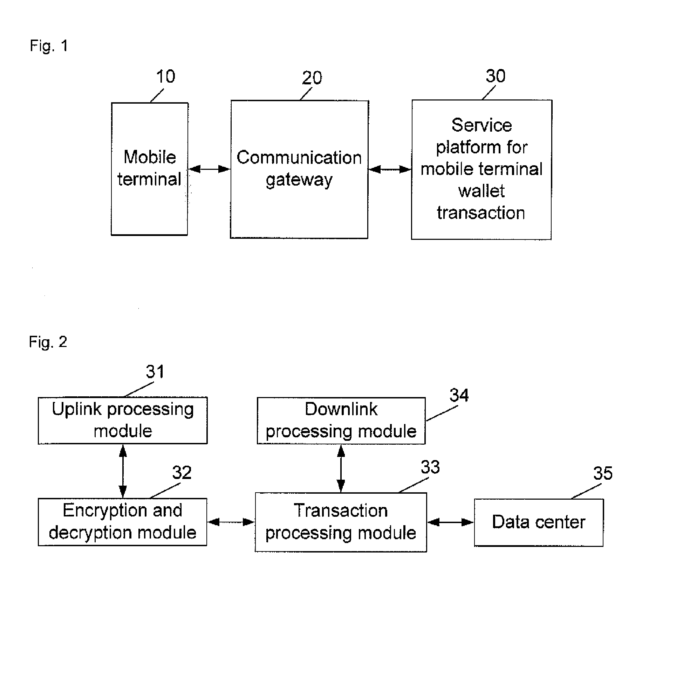

As shown in Fig. 1, the disclosure provides a system for implementing account transfer using a mobile terminal, which consists of a mobile terminal 10, a communication gateway 20 and a service platform 30 for a mobile terminal wallet transaction. The mobile terminal 10 is responsible for editing, encrypting and sending an uplink transaction request. The communication gateway 20 is responsible for receiving and sending the uplink transaction request and forwarding the uplink transaction request to the service platform 30 for the mobile terminal wallet transaction. The service platform 30 for the mobile terminal wallet transaction is responsible for receiving the uplink transaction request forwarded by the communication gateway 20, verifying and decrypting the format of the uplink transaction request, authenticating the user accessing to the mobile terminal wallet transaction, and completing the transaction process of generating and transmitting a response message indicating a successful account transfer.

Wherein, the service platform 30 for the mobile terminal wallet transaction further includes: an uplink processing module 31, an encryption and decryption module 32, a transaction processing module 33, a downlink processing module 34 and a data center 35. As shown in Fig. 2, the uplink processing module 31 is configured to receive the transfer-out transaction request of the transferor and the transfer-in transaction request sent by the transferee or agent through the mobile terminal 10. The encryption and decryption module 32 is configured to perform format verification and decryption of the transfer-out transaction request and transfer-in transaction request, to randomly generate a withdrawal password according to the transfer-out transaction request, and to provide the withdrawal password to the transaction processing module 33 and the mobile terminal 10 of the transferee. The transaction processing module 33 is configured to authenticate a user accessing to the mobile terminal wallet transaction, to complete the transfer-out operation according to the transfer-out transaction request, and to complete the transfer-in operation according to the transfer-in transaction request and the withdrawal password provided by the encryption and decryption module 32. The downlink processing module 34 is configured to return a response message to the mobile terminal 10 of the transferor, transferee or agent after the transaction processing is completed. The data center 35 is configured to store account information of the transferor, transferee and agent, and to log the transaction.

By adopting the abovementioned system, after obtaining the withdrawal password, the transferee may send a transfer-in transaction request to perform account transfer query by using the withdrawal password, and may also provide the withdrawal password to the agent in the withdrawal zone, so that after the agent in the withdrawal zone sends the transfer-in transaction request to confirm the withdrawal, the transferee withdraws funds from the agent, and correspondingly, the account of the agent in the system is increased by a corresponding amount.

Preferably, in order to implement a more secure account transfer processing, each module of the system may also have the following functions:
Firstly, the transfer-out transaction request may include: a mobile terminal number of the transferee, a transfer amount and a transaction password. Correspondingly, the transaction processing module 33 is further configured to perform authentication according to the mobile terminal number of the transferor, the transaction password and the transfer amount, and to deduct the amount from the account of the transferor after the authentication is passed. The downlink processing module 34 is further configured to send the response message containing the withdrawal password to the mobile terminal 10 of the transferee after the transaction processing is completed. The data center 35 is further configured to log the transaction of the transfer as well as the mobile terminal number of the transferee and the withdrawal password.
Secondly, the transfer-in transaction request of the transferee may include: the mobile terminal number of the transferee, the withdrawal password and an agent code. Correspondingly, the encryption and decryption module 32 is further configured to randomly generate the withdrawal verification code according to the transfer-in transaction request of the transferee. The transaction processing module 33 is further configured to verify the agent code and to update the transaction log of the transfer after the verification is passed. The downlink processing module 34 is further configured to send a response message containing the withdrawal verification code to the mobile terminal 10 of the transferee after the transaction processing is completed. The data center 35 is further configured to record the agent code and the withdrawal verification code.

Finally, the transfer-in transaction request of the agent may include: the mobile terminal number of the transferee, the withdrawal amount, the withdrawal verification code and the transaction password of the agent. Correspondingly, the transaction processing module 33 is further configured to verify the mobile terminal number and transaction password of the agent, to query the corresponding transaction log from the data center 35 according to the mobile terminal number of the transferee, the withdrawal amount and the withdrawal verification code after the verification is passed, and to increase the amount in the account of the agent (the increased amount in the account of the agent is the withdrawal amount of the transferee) and calculate transaction commissions after the query is successful. The downlink processing module 34 is further configured to send a response message indicating successful withdrawal to the mobile terminal 10 of the transferee after the transaction processing is completed. The data center 35 is further configured to record the calculated transaction commissions in the transaction log.

It should be noted that, in the disclosure, both the transaction request and the response message indicating that the transaction processing is completed may be edited into a short message to be sent, of course, which may not be limited to such way and may also be sent in other feasible message interaction ways.

The method for implementing account transfer using the mobile terminal according to the disclosure is further described below in conjunction with the internal structure of the service platform 30 for the mobile terminal wallet transaction shown in Fig. 2 in detail. In the following embodiments, the way of sending the transaction request and the response message indicating that the transaction process is completed through a short message is taken as an example for description.

Firstly, the service platform 30 for the mobile terminal wallet transaction processes the request for account transfer (i.e., the transfer-out transaction request) from the transferor, and the process is illustrated in the following steps:
step 301: the transferor edits a short message for account transfer, for example "TM*mobile terminal number of transferee*transfer amount*transaction password", by using the mobile terminal 10, and the mobile terminal 10 of the transferor encrypts the short message and sends it to the transaction center number, so as to access to the mobile terminal wallet transaction;
step 302: the communication gateway 20 receives the short message for account transfer and then forwards it to the uplink processing module 31 of the service platform 30 for the mobile terminal wallet transaction;
step 303: the encryption and decryption module 32 decrypts the short message for account transfer, verifies the format of the short message for account transfer and randomly generates a withdrawal password;
step 304: the transaction processing module 33 verifies the mobile terminal number of the transferor, the transaction password and the transfer amount;
step 305: after the verification is passed, the transaction processing module 33 deducts the amount from the account of the transferor, logs the transaction of the transfer, and stores the mobile terminal number of the transferee and the withdrawal password in the data center 35;
step 306: the downlink processing module 34 generates a short message indicating successful transfer, and transmits it to the mobile terminal number of the transferee, wherein the short message indicating successful transfer contains the withdrawal password.

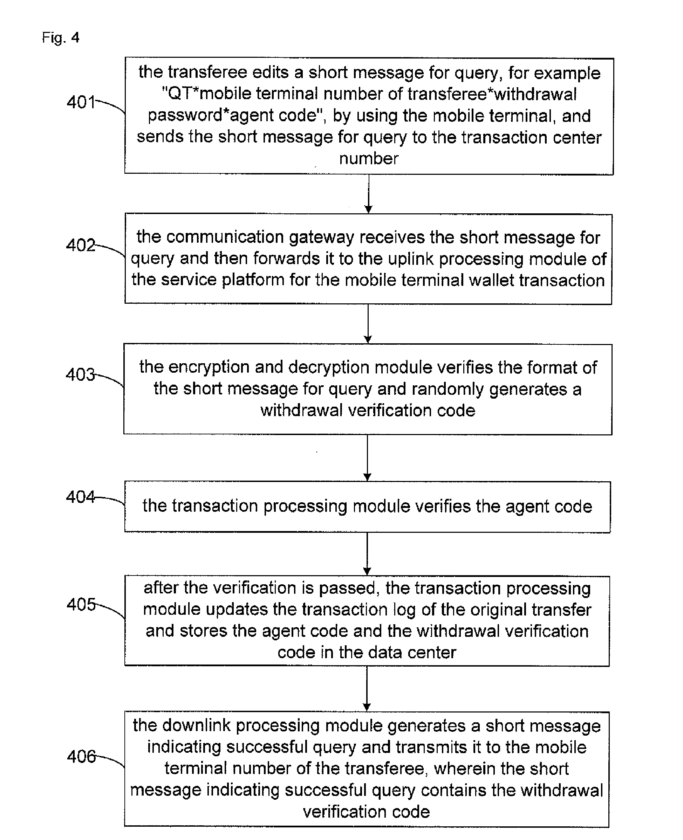

After completely processing the transfer request of the transferor, the service platform 30 for the mobile terminal wallet transaction needs to notify a corresponding transferee; and the transferee can go to any agent for withdrawal after receiving the short message indicating successful transfer. Firstly, the transferee needs to perform account transfer query, as shown in Fig. 4, which mainly includes the following steps:
step 401: the transferee edits a short message for query, for example "QT*mobile terminal number of transferee*withdrawal password*agent code", by using the mobile terminal 10, and the mobile terminal 10 of the transferee sends the short message for query (i.e., the transfer-in transaction request of the transferee) to the transaction center number;
step 402: the communication gateway 20 receives the short message for query and then forwards it to the uplink processing module 31 of the service platform 30 for the mobile terminal wallet transaction;
step 403: the encryption and decryption module 32 verifies the format of the short message for query and randomly generates a withdrawal verification code;
step 404: the transaction processing module 33 verifies the agent code;
step 405: after the verification is passed, the transaction processing module 33 updates the transaction log of the original transfer and stores the agent code and the withdrawal verification code in the data center 35;
step 406: the downlink processing module 34 generates a short message indicating successful query and transmits it to the mobile terminal number of the transferee, wherein the short message indicating successful query contains the withdrawal verification code.

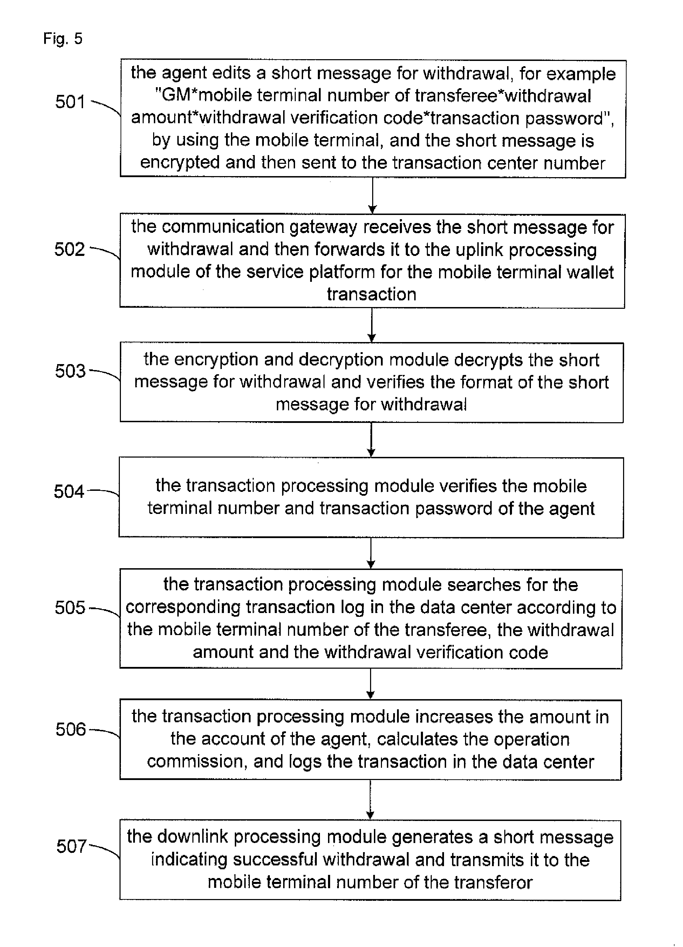

After the transfer query is completed, the agent may execute the withdrawal operation through the mobile terminal 10 and provide the transferred funds to the transferee; and then the transferee withdraws the funds from the agent, the process is shown in Fig. 5 and mainly includes the following steps:
step 501: the agent edits a short message for withdrawal (i.e., the transfer-in transaction request of the agent), for example "GM*mobile terminal number of transferee*withdrawal amount*withdrawal verification code*transaction password", by using the mobile terminal 10, and the mobile terminal of the agent encrypts the short message and then sends it to the transaction center number;
step 502: the communication gateway 20 receives the short message for withdrawal and then forwards it to the uplink processing module 31 of the service platform 30 for the mobile terminal wallet transaction;
step 503: the encryption and decryption module 32 decrypts the short message for withdrawal and verifies the format of the short message for withdrawal;
step 504: the transaction processing module 33 verifies the mobile terminal number and transaction password of the agent;
step 505: the transaction processing module 33 searches for the corresponding transaction log in the data center 35 according to the mobile terminal number of the transferee, the withdrawal amount and the withdrawal verification code;
step 506: the transaction processing module 33 increases the amount in the account of the agent (the increased amount in the account of the agent is the withdrawal amount of the transferee), calculates the operation commission, and logs the transaction in the data center;
step 507: the downlink processing module 34 generates a short message indicating successful withdrawal and transmits it to the mobile terminal number of the transferor.

The agent charges the commission of the transferee and provides the withdrawal user with cash. In addition, the transaction processing module 33 will automatically refund to return the amount deducted from the account of the transferor to the transferor in the case that the transferee has not made a withdraw within a preset period (for example 7 days) after the transaction processing module 33 deducts the amount from the account of the transferor.

To sum up, the disclosure makes the account transfer using the mobile terminal more flexible and the account transfer can be completed only if the transferor knows the mobile terminal number of the transferee without binding the mobile terminal number of the transferee. For the area with less bank outlets, the account transfer using the mobile terminal according to the disclosure makes the account transfer and withdrawal of the user more convenient and fast, and also provides the operator with a new room for profits.

All those described above are only preferred embodiments of the disclosure, and are not intended to limit the protection scope of the disclosure.

## Claims

1. A service platform for a mobile terminal wallet transaction, comprising: an uplink processing module, an encryption and decryption module, a transaction processing module and a downlink processing module, wherein
the uplink processing module is configured to receive a transfer-out transaction request from a transferor and a transfer-in transaction request from a transferee or an agent;
the encryption and decryption module is configured to perform format verification and decryption of the transfer-out transaction request and transfer-in transaction request, to randomly generate a withdrawal password according to the transfer-out transaction request, and to provide the withdrawal password to the transaction processing module and the transferee;
the transaction processing module is configured to authenticate a user accessing the mobile terminal wallet transaction, to perform the transfer-out operation according to the transfer-out transaction request, and to perform the transfer-in operation according to the transfer-in transaction request and the withdrawal password provided by the encryption and decryption module; and
the downlink processing module is configured to return a response message to the mobile terminal of the transferor, transferee or agent after the transaction processing is completed.

2. The service platform for the mobile terminal wallet transaction according to claim 1, further comprising: a data center which is configured to store account information of the transferor, transferee and agent, and to log the transaction.

3. The service platform for the mobile terminal wallet transaction according to claim 2, wherein the transfer-out transaction request includes a mobile terminal number of the transferee, a transfer amount and a transaction password; and
wherein the transaction processing module is further configured to perform authentication according to the mobile terminal number of the transferor, the transaction password and the transfer amount, and to deduct the amount from the account of the transferor after the authentication is passed;
the downlink processing module is further configured to send a response message containing the withdrawal password to the mobile terminal of the transferee after the transaction processing is completed; and
the data center is further configured to log the transaction of the transfer as well as the mobile terminal number of the transferee and the withdrawal password.

4. The service platform for the mobile terminal wallet transaction according to claim 3, wherein the transfer-in transaction request of the transferee comprises: the mobile terminal number of the transferee, the withdrawal password and an agent code;
the encryption and decryption module is further configured to randomly generate a withdrawal verification code according to the transfer-in transaction request of the transferee;
the transaction processing module is further configured to verify the agent code and to update the transaction log of the transfer after the verification is passed;
the downlink processing module is further configured to send a response message containing the withdrawal verification code to the mobile terminal of the transferee after the transaction process is completed; and
the data center is further configured to record the agent code and the withdrawal verification code.

5. The service platform for the mobile terminal wallet transaction according to claim 4, wherein the transfer-in transaction request of the agent comprises: the mobile terminal number of the transferee, the withdrawal amount, the withdrawal verification code and the transaction password of the agent;
the transaction processing module is further configured to verify the mobile terminal number and transaction password of the agent, to query the corresponding transaction log from the data center according to the mobile terminal number of the transferee, the withdrawal account and the withdrawal verification code after the verification is passed, and to increase the amount in the account of the agent and calculate transaction commissions after the query is successful;
the downlink processing module is further configured to send a response message indicating successful withdrawal to the mobile terminal of the transferee after the transaction process is completed; and
the data center is further configured to record the calculated transaction commissions in the corresponding transaction log.

6. The service platform for the mobile terminal wallet transaction according to any one of claims 1 to 5, wherein the transaction processing module is further configured to return the amount deducted from the account of the transferor to the transferor in the case that the transferee has not made withdraw within a preset period after the amount is deducted from the account of the transferor.

7. A method for implementing account transfer using a mobile terminal, comprising:
receiving, by an uplink processing module, a transfer-out transaction request of a transferor and a transfer-in transaction request of a transferee or an agent;
performing verification and decryption of the transfer-out transaction request and transfer-in transaction request, randomly generating a withdrawal password according to the transfer-out transaction request, and providing the withdrawal password to a transaction processing module and a transferee, by an encryption and decryption module;
authenticating a user accessing to the mobile terminal wallet transaction, performing the transfer-out operation according to the transfer-out transaction request, and performing the transfer-in operation according to the transfer-in transaction request and the withdrawal password provided by the encryption and decryption module, by the transaction processing module; and
returning, by a downlink processing module, a response message to the mobile terminal of the transferor, transferee or agent after the transaction processing is completed.

8. The method for implementing account transfer using the mobile terminal according to claim 7, further comprising:
storing account information of the transferor, transferee and agent, and logging the transaction, by a data center.

9. The method for implementing account transfer using the mobile terminal according to claim 8, wherein the transfer-out transaction request includes a mobile terminal number of the transferee, a transfer amount and a transaction password; and
the method further comprises:
performing authentication according to the mobile terminal number of the transferor, the transaction password and the transfer amount, and deducting the amount from the account of the transferor after the authentication is passed, by the transaction processing module;
sending, by the downlink processing module, a response message containing the withdrawal password to the mobile terminal of the transferee after the transaction processing is completed; and
logging, by the data center, the transaction of the transfer as well as the mobile terminal number of the transferee and the withdrawal password.

10. The method for implementing account transfer using the mobile terminal according to claim 9, wherein the transfer-in transaction request of the transferee comprises: the mobile terminal number of the transferee, the withdrawal password and an agent code; and
the method further comprises:
randomly generating, by the encryption and decryption module, a withdrawal verification code according to the transfer-in transaction request of the transferee;
verifying the agent code and updating the transaction log of the transfer after the verification is passed, by the transaction processing module;
sending, by the downlink processing module, a response message containing the withdrawal verification code to the mobile terminal of the transferee after the transaction process is completed; and
recording, by the data center, the agent code and the withdrawal verification code.

11. The method for implementing account transfer using the mobile terminal according to claim 10, wherein the transfer-in transaction request of the agent comprises: the mobile terminal number of the transferee, the withdrawal amount, the withdrawal verification code and the transaction password of the agent; and
the method further comprises:
verifying the mobile terminal number and transaction password of the agent, querying the corresponding transaction log from the data center according to the mobile terminal number of the transferee, the withdrawal account and the withdrawal verification code after the verification is passed, and increasing the amount in the account of the agent and calculating the transaction commissions after the query is successful, by the transaction processing module;
sending, by the downlink processing module, a response message indicating successful withdrawal to the mobile terminal of the transferee after the transaction process is completed; and
recording, by the data center, the calculated transaction commissions in the corresponding transaction log.

12. The method for implementing account transfer using the mobile terminal according to any one of claims 7 to 11, further comprising: returning the amount deducted from the account of the transferor to the transferor by the transaction processing module in the case that the transferee has not made withdraw within a preset period after the amount is deducted from the account of the transferor.
